# EUROPEAN PATENT SPECIFICATION

(11) **EP 0 902 994 B1**
(45) Date of publication and mention of the grant of the patent: **28.11.2001**
(21) Application number: 97920906.1
(22) Date of filing: 27.05.1997
(51) Int. Cl.: H01R 12/22, H01R 13/24

(54) **RECHARGEABLE BATTERY CONNECTOR**
STECKVERBINDER FÜR WIEDERAUFLADBARE BATTERIEN
CONNECTEUR DE BATTERIE RECHARGEABLE

(30) Priority: 31.05.1996 GB 9611337; 09.12.1996 EP 96119704
(43) Date of publication of application: 24.03.1999
(73) Proprietor: THE WHITAKER CORPORATION, Wilmington, Delaware 19808 (US)
(72) Inventor: JAEGER, Peter, Dirk, NL-5221 HL Engelen (NL)
(74) Representative: Heinz-Schäfer, Marion
(86) International application number: IB9700593
(87) International publication number: WO9745900

(56) References cited:
- EP-A- 0 373 003
- EP-A- 0 590 517
- WO-A-95/17774
- US-A- 5 378 160
- PATENT ABSTRACTS OF JAPAN vol. 18, no. 195 (E-1533), 5 April 1994 & JP 06 005332 A (MATSUSHITA ELECTRIC IND CO LTD), 14 January 1994,

## Description

This invention relates to an electrical connector mountable on a printed circuit board and having spring contacts for resiliently contacting a device, in particular a removable rechargeable battery.

Portable phones and other portable apparatus with rechargeable batteries typically comprise resilient electrical contacts that protrude beyond a mating face of the housing within which they are mounted, and biasable into the housing when the battery device is placed thereon. Due to the relatively large tolerances and frequent coupling and uncoupling of such contacts, they are provided with long spring arms and a great flexibility to absorb large tolerances in positioning, and to ensure operation within the elastic range of the contact. As the spring contacts protrude beyond the mating face quite substantially, external objects may get caught under the contact leading to damage thereof.

In US-A-5378160 an electrical connector is disclosed comprising a housing having a cavity extending therethrough from a mounting face to a mating face, and a terminal mounted in a cavity, the terminal having a connection portion, a contact portion for contacting a complementary contact, and a supple spring portion extending between the contact and connection portion, the terminal contact portion protruding beyond the mating face.

A connector system is disclosed in EP-A-0590517 where a base portion of a terminal is secured in a through cavity by interference fit of a barbed portion within the cavity. A resilient contact spring is affixed to the base portion outside the cavity and spans a partition wall. On the other side of the partition wall, a free end portion of the terminal is biased against a surface of the partition wall wall during mating of the connector in order to position the terminal in a direction transverse to the direction of spring biasing of the terminal.

Due to the supple spring and large travel, it is typical that the contact point travels not only in the direction of mating, but transversely thereto. The transverse movement requires larger contact pads on the portable apparatus. It would be desirable to increase the accuracy of the contact positioning to enable provision of smaller contact pads and to ensure reliable contact.

In view of the large tolerances in positioning of the complementary contacts, the contact forces of the mating contacts vary significantly. A reasonable minimum force is however desired to ensure reliable electrical contact even if some dirt is present on the contact surfaces. It would be helpful to combine such minimum contact force with a certain wiping action upon mating of the contacts to assist in cleaning the contact surfaces.

It is also a continuous requirement to provide a cost effective electrical connector for mounting on a printed circuit board. It is further desirable if the connector is as compact as possible, in particular a connector that occupies little space on a circuit board.

It is an object of this invention to provide an improved electrical connector having supple resilient contacts for connection to contact pads of a complementary device such as a rechargeable battery.

Objects of this invention have been achieved by providing the connector according to claim 1. Disclosed herein is an electrical connector comprising a housing having a cavity extending therethrough from a mounting face to a mating face, and a terminal mounted in the cavity, the terminal having a connection portion, a contact portion for contacting a complementary contact, and a supple spring portion extending between the contact and connection portions, the terminal contact portion protruding beyond the mating face, wherein the contact portion is resiliently pivotly attached to the spring portion at one end, and attached to a free end portion at an opposed end, the opposed ends positioned proximate opposed end walls in the housing cavity, wherein upon biasing of the contact in the housing, the free end portion is resiliently biasable against the corresponding cavity end wall for positioning the contact portion in a direction transverse to the direction of spring biasing of the terminal. Also disclosed is an electrical connector for mounting on a PCB, comprising a housing having a cavity extending therethrough from a mounting face to a mating face, and a terminal mounted in the cavity, the terminal having a connection portion, a contact portion for contacting a complementary contact, and a supple spring portion extending between the contact and connection portions, the terminal contact portion protruding beyond the mating face, wherein the terminal connection portion comprises PCB surface mount pads or legs positioned below the housing and attached to the spring section, the connection portion being substantially fully positioned below the housing for minimal use of PCB surface area. Advantageously, a supple, reliable and cost effective spring contact is provided.

Provision of connector walls to guide the transverse movement of the contact point, enables accurate positioning of the contact whilst allowing large spring deflection in the mating direction.

Provision of locating members at a free end of the contact, for pre-stressing the contact in the uncoupled state, ensures provision of an acceptable minimum contact force, that in combination with the wiping action ensures a good electrical contact with complementary pads.

Provision of surface mount contact pads or legs below the connector housing, leads to less usage of surface area on the printed circuit board due to provision of the pads below the housing. In addition, the U-shaped bend provides some resilience that reduces local stresses on the solder connection in one embodiment. The latter thus ensures a more secure attachment of the connector to a printed circuit board. In another embodiment, a plurality of spaced apart PCB legs bent orthogonally from the contact base ensure a robust attachment to a PCB.

Further advantageous features of the invention are described in the claims or will be apparent from following description and the drawings.

Embodiments of this invention will now be described by way of example, with reference to the accompanying drawings, whereby;
Figure 1 is a cross-sectional view through a connector according to this invention;
Figures 2, 3 and 4 are isometric views in different directions of a connector according to this invention;
Figure 5 is an exploded view of a connector according to this invention;
Figure 6 is an isometric view of a contact of the connector;
Figure 7 is a cross-sectional view similar to that of Figure 1 but of a second embodiment;
Figures 8 and 9 are isometric views of the second embodiment, from a top face and a bottom face respectively; and
Figure 10 is an isometric view of one of the contacts of the second embodiment.

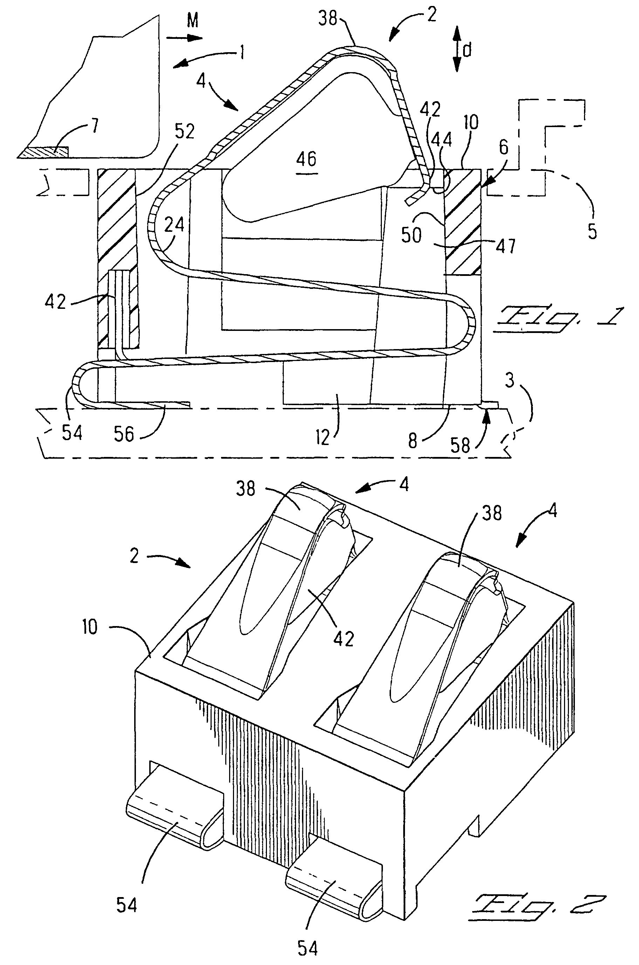

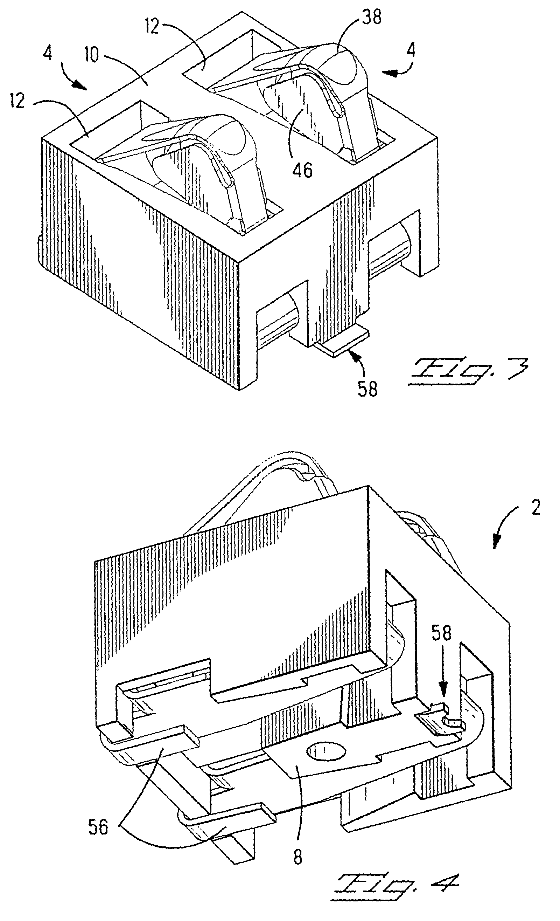

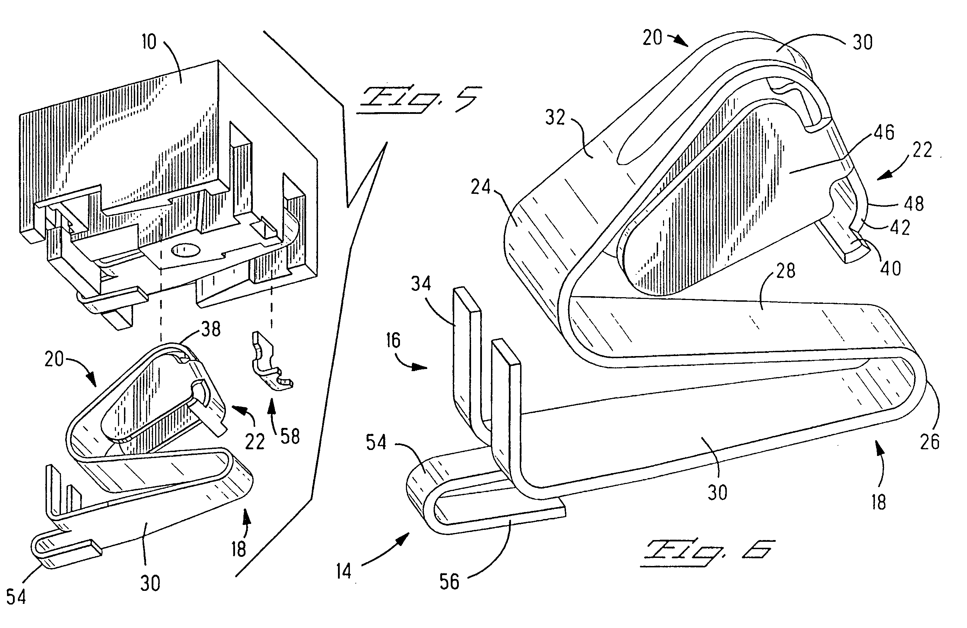

Referring to Figures 1 and 3, an electrical connector 2 for connection to a device 1 (partly shown), comprises a pair of terminals 4 mounted in an insulative housing 6. The connector 2 is mounted in a device such as a cellular phone, having a casing 15 and a printed circuit board 3. The housing 6 extends from a mounting face 8 to a mating face 10, and has terminal receiving cavities 12 extending in a mating direction D for receiving the terminals 4 therein. The connector 2 is mountable on the printed circuit board (not shown) where the mounting face 8 is adjacent the printed circuit board, and the mating face 10 facing a complementary connector 3 for mating with the connector 2. The complementary connector may be planar contact pads 7 of a rechargeable replaceable battery or other power supply that forms the device 1.

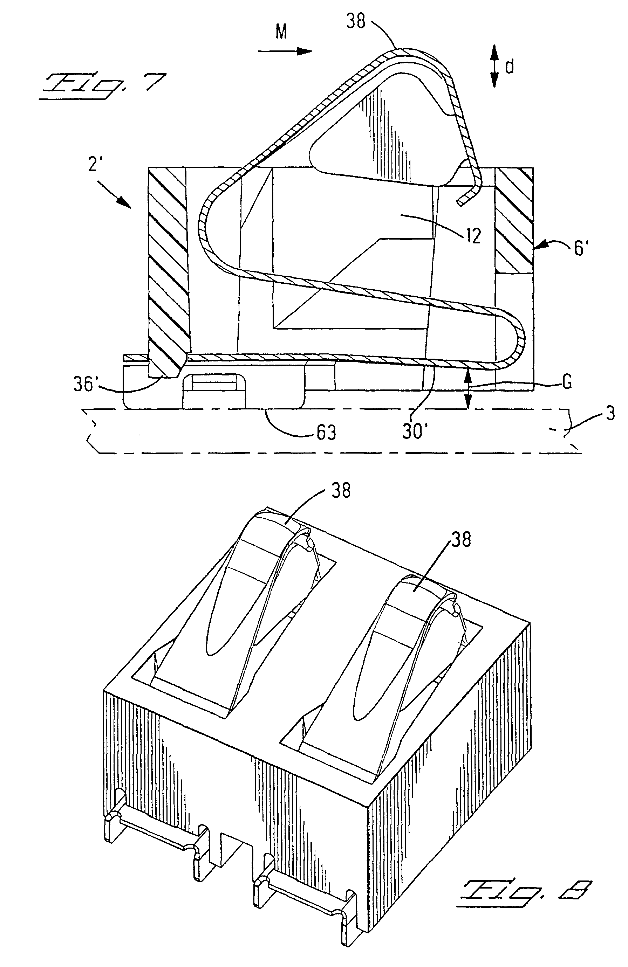

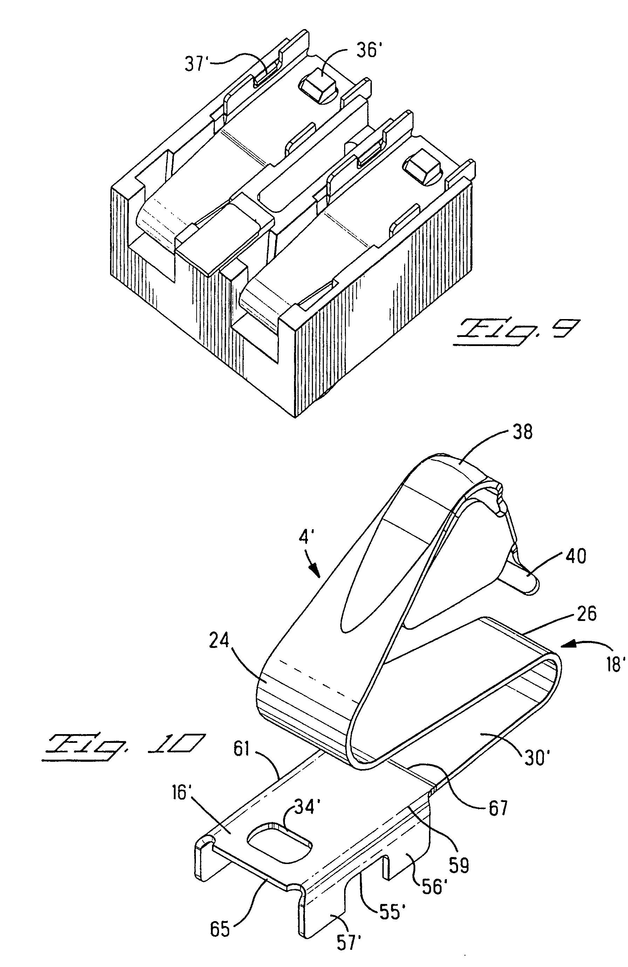

Referring to Figures 1 and 6, the terminal 4 comprises a PCB mounting or connection portion 14, a housing retention portion 16, a spring portion 18, a contact portion 20 and a free end portion 22. The terminal 4 is stamped and formed as a unitary part from sheet metal.

The spring portion 18 has a generally S-shape comprising two substantially U-shaped bends 24,26 interconnecting substantially planar portions 28,30,32 interconnecting the contact portion 20 to the attachment portion 16.

The attachment portion 16 comprises retention tabs 34 upstanding in the mating direction D of the connector and receivable in complementary cavities 36 in the housing 6 in an interference fit. The retention tabs 34 can be provided with barbs or other such retention features for securely lodging the tabs in the cavity 36, thereby securing the terminals to the housing. The housing cavity 12 and retention features 36,34 are adapted in such a manner that the terminal 4 can be inserted into the housing from the mounting side 8. The latter enables rapid automated assembly of the terminals to the housing by "stitching" the terminals 4 into the cavities 12 in a single movement, in other words by simply pressing the terminals 4 in the spring compression direction D whereby the retention tabs 34 engage the housing cavities 36.

The contact portion 20 is provided with an arcuate shape and a central embossment 38 forming a contact surface for contacting a complementary pad.

The free end portion 22 of the contact is provided with pre-stressing engagement members 40 in the shape of a wing (or wings) extending laterally beyond the edges 42 of the free end portion, the wings 40 being engageable with complementary pre-stressing engagement members 44 of the housing in the shape of shoulders recessed into sidewalls of the cavities 12. Upon stitching of the terminal 4 into the cavity 12, the wings 40 engage the shoulders 44 thereby pre-stressing the spring portion 18 of the contact. A minimal spring force is thus provided even if the complementary contact pads only slightly displace the contact 38 in the direction D. In this embodiment, the complementary device 1 is coupled to the connector 2 by movement thereover in the direction M substantially parallel to the connector mating face 10. The connector construction would also enable mating in the direction of biasing D of the contact.

The terminal 4 is further provided with protection plates 46 that cover a substantial area below the contact portion 20 that extends beyond the mating face 10 in the uncoupled state. Protective plates 46 are provided on either side of the contact and prevent external objects from hooking under the arcuate contact portion 20, thereby preventing damage thereto. The protective plates 46 can be integrally provided and bent from the free end portion 22.

The free end portion 22 is further provided with a convex abutment surface 48 that abuts an end-wall 50 of the cavity 12 when the contact portion 20 is depressed into the housing. The U-bend 24 of the spring portion 18 abuts the opposed end-wall 52 of the cavity 12 such that the contact is guided in a direction transverse to the direction D during depression thereof. The contact point 38 moves in a pivoting motion about the U-bend 24, thereby enabling some transverse movement of the contact during coupling. The latter provides a wiping action that advantageously removes dirt or oxides on the contact surfaces, which is particularly useful for mating in the direction D.

Abutment of the free-end portion 22 against the cavity end-wall 50 ensures that the contact 38 is positioned in a determined manner for more accurate positioning with respect to complementary contact pads. The abutment also opposes the biasing and sliding forces in the transverse direction M during coupling of the device 1, thereby preventing overstressing of the spring section 18. In other words, during transverse sliding of the device 1 over the contact portion 20, the free end portion 22 abuts the cavity wall 50 and smoothly guides the contact portion in the contact biasing direction D into the housing cavity 12. Upon retracting the device 1, engagement of the pre-stressing wings 40 in the housing cavity sidewall recesses 47 prevents the terminal from overstress, i.e. by the contact portion 20 being pulled excessively in the direction M thereby pivotly deforming the spring portion of the U-bend 24.

The mounting portion 14 of the contact extends from the base plate 30 of the spring portion 18 through a U-bend 54 to a large surface mount contact pad 56 that is positioned beneath the housing 6 (when looking in the mating direction). The latter arrangement reduces the usage of surface area of a printed circuit board, and additionally the U-bend provides some resiliency in the contact pad with respect to the retention portion 16 to reduce local stress on the solder connection. A further surface mount pad 58, stamped and formed from sheet metal, (see Figure 5) is assembled to the housing 6 at an opposed end to the terminal contact pads 56 for additional mechanical securing of the connector to a printed circuit board.

Referring to Figures 7-10, the second embodiment 2' will now be described. Only the main differences between the connector second embodiment 2' and the connector 2 of Figures 1-6 will be described, where identical or very similar features are given the same numbering, and different features with the same function given numbers with a prime. The main difference between the connectors 2, 2' is in the PCB mounting portion 14,14' of the contact 4,4'.

The mounting or connection portion 14' of the second embodiment 2' comprises surface mount contact legs 56',57' extending in a plane substantially orthogonal to a mounting portion 16' extending from the planar portion 30' of the spring portion 18'. There are a pair of surface mount contact legs 56',57' spaced apart in the slide mating direction M (see Figure 7), which is substantially parallel to the direction of extension of the spring arm 30'. The surface mount contact legs 56',57' are provided extending from opposed lateral edges 59,61 of the substantially planar mounting portion 16'. The contact legs 56',57' raise the mounting portion 16' from the surface of a printed circuit board 3 abutting against lower free edges 63 of the contact legs, such that a gap (G) is provided between the lower spring arm 30' and the PCB. This enables flexing movement of the spring arm towards the PCB to increase the flexibility of the contact 38 into the housing cavity 12 (i.e. in the biasing direction D). The four contacts legs 56',57' spaced apart from each other provide a very secure and robust mechanical connection to the PCB, as well as an effective electrical connection. The contact legs of the mounting portion 16' are positioned, as in the previous embodiment, substantially below the housing when looking in the direction D of depression of the spring, such that minimal surface area of the PCB 3 is occupied.

The contacts 4' are also stitched into the cavity 12 of the housing 6', where a retention stud 36' of the housing 6' plugs into a retention member 34' in the form of a cutout in the contact mounting portion 16' in an interference fit. Latches 37' may also be provided on side walls of the housing (see Figure 9) for engaging in the recess 55' between the spaced apart pair of contact legs 56',57'. The contacts 4' can thus be rapidly and simply assembled to the housing 6' by insertion in a single movement and in one direction. The substantially planar mounting portion 16' may be connected to a carrier strip during the stamping and forming process from sheet metal, the contact being severed from the carrier strip at a free end 65 of the mounting portion 16' opposite and remote from an end 67 to which the spring arm 30' is attached. The lateral surface mount legs 56',57' enable the end 65 to be free for connection to the carrier strip which facilitates manufacturing. Other features of the contact 4' such as: the prestressing wings 40 of the free end portion 22; contact portion 20; U-shaped bends 24,26 of the spring portion; and cooperation of these parts with the housing 6', are largely the same as the previous embodiment and will therefore not be described further.

## Claims

1. An electrical connector (2,2') comprising a housing (6) having a cavity (12) extending therethrough from a mounting face (8) to a mating face (10), and a terminal (4,4') mounted in the cavity (12), the terminal having a connection portion (14), a contact portion (20) for contacting a complementary contact, and a supple spring portion (18) extending between the contact and connection portions, the terminal contact portion protruding beyond the mating face (10), **characterized in that** the contact portion (20) is resiliently pivotly attached to the spring portion at one end (24), and attached to a free end portion (22) at an opposed end, the opposed ends positioned proximate opposed end walls (50,52) in the housing cavity (12), wherein upon biasing of the contact portion (20) in the housing, the free end portion is resiliently biasable against the corresponding cavity end wall (50) for positioning the contact portion in a direction transverse to the direction (D) of spring biasing of the terminal.

2. The connector of claim 1 wherein the end (24) of the spring portion to which the contact portion is resiliently pivotly attached, abuts the corresponding housing cavity end wall (52) during biasing of the contact portion into the housing cavity (12).

3. The connector of claim 1 or 2 wherein the terminal connection portion (14,14') comprises PCB surface mount pads or legs (56,56',57') positioned below the housing (6) and attached to the spring section (18), the connection portion being substantially fully positioned below the housing for minimal use of PCB surface area.

4. The connector of any one of claims 1-3 wherein the terminal connection portion (14) comprises PCB surface mount pads (56) positioned below the housing (6) by attachment to the spring section (18) through a U-bend (54).

5. The connector of any one of claims 1-3 wherein the terminal connection portion (14') comprises a base extending from an arm (30') of the spring portion (18), and PCB legs (56',57') extending substantially orthogonally from lateral edges (59,61) of the base for surface mount connection to a PCB (3).

6. The connector of claim 5 wherein there are a pair of PCB legs (56',57') separated by a recess (55') arranged in the direction of extension of the spring arm (30'), on either edge (59,61).

7. The connector of any one of claims 1-6 wherein at least one protective plate (46) is provided below the contact portion to prevent external objects from insertion between the protruding contact portion and connector mating face.

8. The connector of claim 7 wherein the protective plate (46) is integrally formed and bent from the contact portion 20.

9. The connector of any one of the preceding claims wherein a free end portion (22) at a free end of the contact portion (20) is provided with a pre-stress member (40) engaging a complementary pre-stress member (44) of the housing for pre-stressing the terminal in the uncoupled state.

10. The connector of claim 9 wherein the contact pre-stress member (40) is a lateral wing extension (40) that abuts a housing shoulder (44) forming the complementary pre-stress member.

11. The connector of any one of the preceding claims wherein the terminal is assembled into the housing cavity (12) from the mounting face in direction (D) of spring biasing of the terminal.

12. The connector of claim 11 wherein the terminal comprises a retention tab (34) extending in the terminal spring biasing direction (D) and arranged at one end of the spring portion (18) proximate the connection portion, for insertion into a cavity (36) of the housing in an interference fit.

13. The connector of claim 11 wherein the housing is provided with latch members (36',37') that grip onto the terminal mounting portion (14') during assembly, for securing the terminal thereto.

## Patentansprüche

1. Elektrischer Verbinder (2, 2') der aufweist: ein Gehäuse (6) mit einem Hohlraum (12), der sich dort hindurch von einer Montagefläche (8) aus zu einer Eingriffsfläche (10) erstreckt; und eine Anschlußklemme (4, 4'), die im Hohlraum (12) montiert ist, wobei die Anschlußklemme aufweist: einen Verbindungsabschnitt (14); einen Kontaktabschnitt (20) für ein Kontaktieren eines komplementären Kontaktes; und einen biegsamen Federabschnitt (18), der sich zwischen dem Kontakt- und dem Verbindungsabschnitt erstreckt, wobei der Klemmenkontaktabschnitt über die Eingriffsfläche (10) hinaus vorsteht, **dadurch gekennzeichnet, daß** der Kontaktabschnitt (20) elastisch drehbar am Federabschnitt an einem Ende (24) befestigt ist, und daß er an einem freien Endabschnitt (22) an einem gegenüberliegenden Ende befestigt ist, wobei die gegenüberliegenden Enden in unmittelbarer Nähe der gegenüberliegenden Stirnwände (50, 52) im Gehäusehohlraum (12) positioniert sind, worin beim Vorspannen des Kontaktabschnittes (20) im Gehäuse der freie Endabschnitt elastisch gegen eine entsprechende Stirnwand (50) des Hohlraumes für ein Positionieren des Kontaktabschnittes in einer Richtung vorspannbar ist, die quer zur Richtung (D) des Vorspannens der Anschlußklemme durch die Feder verläuft.

2. Verbinder nach Anspruch 1, bei dem das Ende (24) des Federabschnittes, an dem der Kontaktabschnitt elastisch drehbar befestigt ist, an die entsprechende Stirnwand (52) des Gehäusehohlraumes während des Vorspannens des Kontaktabschnittes in den Gehäusehohlraum (12) hinein anstößt.

3. Verbinder nach Anspruch 1 oder 2, bei dem der Klemmenverbindungsabschnitt (14, 14') Leiterplatten-Oberflächenmontageanschlußflächen oder -schenkel (56, 56', 57') aufweist, die unterhalb des Gehäuses (6) positioniert und am Federabschnitt (18) befestigt sind, wobei der Verbindungsabschnitt im wesentlichen vollständig unterhalb des Gehäuses für eine minimale Benutzung der Leiterplattenoberfläche positioniert ist.

4. Verbinder nach einem der Ansprüche 1 bis 3, bei dem der Klemmenverbindungsabschnitt (14) Leiterplatten-Oberflächenmontageanschlußflächen (56) aufweist, die unterhalb des Gehäuses (6) durch eine Befestigung am Federabschnitt (18) mittels eines U-Krümmers (54) positioniert sind.

5. Verbinder nach einem der Ansprüche 1 bis 3, bei dem der Klemmenverbindungsabschnitt (14') aufweist: eine Basis, die sich von einem Arm (30') des Federabschnittes (18) aus erstreckt; und Leiterplattenschenkel (56', 57'), die sich im wesentlichen orthogonal von den Seitenrändern (59, 61) der Basis für eine Oberflächenmontageverbindung mit einer Leiterplatte (3) erstrecken.

6. Verbinder nach Anspruch 5, bei dem ein Paar Leiterplattenschenkel (56', 57') vorhanden ist, die durch eine Aussparung (55) getrennt sind, die in der Richtung der Ausdehnung des Federarmes (30') an beiden Rändern (59, 61) angeordnet ist.

7. Verbinder nach einem der Ansprüche 1 bis 6, bei dem mindestens eine Schutzplatte (46) unterhalb des Kontaktabschnittes vorhanden ist, um zu verhindern, daß äußere Objekte zwischen den vorstehenden Kontaktabschnitt und die Eingriffsfläche des Verbinders gelangen.

8. Verbinder nach Anspruch 7, bei dem die Schutzplatte (46) zusammenhängend mit dem und herausgebogen aus dem Kontaktabschnitt (20) gebildet wird.

9. Verbinder nach einem der vorhergehenden Ansprüche, bei dem ein freier Endabschnitt (22) an einem freien Ende des Kontaktabschnittes (20) mit einem Vorspannelement (40) versehen ist, das mit einem komplementären Vorspannelement (44) des Gehäuses für ein Vorspannen der Anschlußklemme im getrennten Zustand in Eingriff kommt.

10. Verbinder nach Anspruch 9, bei dem das Kontaktvorspannelement (40) eine seitliche Flügelverlängerung (40) ist, die an einen Gehäusevorsprung (44) anstößt, der das komplementäre Vorspannelement bildet.

11. Verbinder nach einem der vorhergehenden Ansprüche, bei dem die Anschlußklemme in den Gehäusehohlraum (12) von der Montagefläche aus in der Richtung (D) des Vorspannens der Anschlußklemme durch die Feder montiert wird.

12. Verbinder nach Anspruch 11, bei dem die Anschlußklemme eine Arretiernase (34) aufweist, die sich in der Klemmenfedervorspannrichtung (D) erstreckt und an einem Ende des Federabschnittes (18) in unmittelbarer Nähe des Verbindungsabschnittes für ein Einsetzen in einen Hohlraum (36) des Gehäuses in einer Preßpassung angeordnet ist.

13. Verbinder nach Anspruch 11, bei dem das Gehäuse mit Einklinkelementen (36', 37') versehen ist, die während der Montage in den Klemmenmontageabschnitt (14') eingreifen, um die Anschlußklemme daran zu sichern.

## Revendications

1. Connecteur électrique (2, 2') comprenant un boîtier (6) comportant une cavité (12) le traversant, d'une face de montage (8) vers une face d'accouplement (10) et une borne (4, 4') montée dans la cavité (12), la borne comportant une partie de connexion (14), une partie de contact (20) destinée à contacter un contact complémentaire, et une partie élastique souple (18) s'étendant entre les parties de contact et de connexion, la partie de contact de la borne débordant au-delà de la face d'accouplement (10), **caractérisé en ce que** la partie de contact (20) est fixée élastiquement et par pivotement à la partie élastique au niveau d'une extrémité (24) et fixée à une partie d'extrémité libre (22) au niveau d'une extrémité opposée, les extrémités opposées étant positionnées près des parois d'extrémité opposées (50, 52) dans la cavité du boîtier (12), la poussée de la partie de contact (20) dans le boîtier permettant de pousser élastiquement la partie d'extrémité libre contre la paroi d'extrémité correspondante de la cavité (50) pour positionner la partie de contact dans une direction transversale à la direction (D) de la poussée élastique de la borne.

2. Connecteur selon la revendication 1, dans lequel l'extrémité (24) de la partie élastique à laquelle est fixée élastiquement et par pivotement la partie de contact, bute contre la paroi d'extrémité correspondante (52) de la cavité du boîtier au cours de la poussée de la partie de contact dans la cavité du boîtier (12).

3. Connecteur selon les revendications 1 ou 2, dans lequel la partie de connexion de la borne (14, 14') comprend des plots ou des branches à montage en surface sur la plaquette à circuits imprimés (56, 56', 57') positionnés au-dessous du boîtier (6) et fixés à la section élastique (18), la partie de connexion étant presque entièrement positionnée au-dessous du boîtier en vue d'occuper une aire de surface minimale de la plaquette à circuits imprimés.

4. Connecteur selon l'une quelconque des revendications 1 à 3, dans lequel la partie de connexion de la borne (14) comprend des plots à montage en surface sur la plaquette à circuits imprimés (56) positionnés au-dessous du boîtier (6) par fixation à la section élastique (18) par l'intermédiaire d'une courbure en U (54).

5. Connecteur selon l'une quelconque des revendications 1 à 3, dans lequel la partie de connexion de la borne (14') comprend une base s'étendant à partir d'un bras (30') de la partie élastique (18), des branches de la plaquette à circuits imprimés (56', 57') s'étendant de manière pratiquement orthogonale à partir des bords latéraux (59, 61) de la base en vue d'une connexion à montage en surface sur une plaquette à circuits imprimés (3).

6. Connecteur selon la revendication 5, dans lequel une paire de branches de la plaquette à circuits imprimés (56', 57') sont séparées par un évidement (55') agencé dans la direction de l'extension du bras élastique (30') sur chaque bord (59, 61).

7. Connecteur selon l'une quelconque des revendications 1 à 6, dans lequel au moins une plaque de protection (46) est agencée au-dessous de la partie de contact pour empêcher l'insertion d'objets externes entre la partie de contact en saillie et la partie d'accouplement du connecteur.

8. Connecteur selon la revendication 7, dans lequel la plaque de protection (46) est formée d'une seule pièce et courbée à partir de la partie de contact (20).

9. Connecteur selon l'une quelconque des revendications précédentes, dans lequel une partie d'extrémité libre (22) au niveau d'une extrémité libre de la partie de contact (20) comporte un élément à précontrainte (40) s'engageant dans un élément à précontrainte complémentaire (44) du boîtier pour soumettre la borne à une précontrainte dans l'état non accouplé.

10. Connecteur selon la revendication 9, dans lequel l'élément de précontrainte du contact (40) est une extension latérale en forme d'aile (40) butant contre un épaulement du boîtier (44) constituant l'élément à précontrainte complémentaire.

11. Connecteur selon l'une quelconque des revendications précédentes, dans lequel la borne est assemblée dans la cavité du boîtier (12) à partir de la face de montage dans la direction (D) de la poussée élastique de la borne.

12. Connecteur selon la revendication 11, dans lequel la borne comprend une patte de retenue (34) s'étendant dans la direction de la poussée élastique de la borne (D) et agencée au niveau d'une extrémité de la partie élastique (18) près de la partie de connexion, en vue de l'insertion dans une cavité (36) du boîtier par ajustement serré.

13. Connecteur selon la revendication 11, dans lequel le boîtier comporte des éléments de verrou (36', 37') s'engageant dans la partie de montage de la borne (14') au cours de l'assemblage pour y fixer la borne.
